**Europäisches Patentamt**

**European Patent Office**

**Office européen des brevets**

(11) Numéro de publication : **0 687 536 A1**

# (12) DEMANDE DE BREVET EUROPEEN

(21) Numéro de dépôt : **95401320.7**

(22) Date de dépôt : **08.06.95**

(51) Int. Cl.⁶ : **B29C 33/06, H05B 6/80**

(30) Priorité : **08.06.94 FR 9407008**

(43) Date de publication de la demande :
**20.12.95 Bulletin 95/51**

(84) Etats contractants désignés :
**DE ES GB IT**

(71) Demandeur : **REGIE NATIONALE DES USINES RENAULT**
**34, Quai du Point du Jour**
**F-92109 Boulogne-Billancourt (FR)**

(72) Inventeur : **Delaunay, Didier**
**46, rue du Plessis Tison**
**F-44300 Nantes (FR)**

Inventeur : **Jullien, Henri**
**163, av. du Général Leclerc**
**F-92340 Bourg La Reine (FR)**
Inventeur : **More, Claude**
**55, rue des Morillons**
**F-75015 Paris (FR)**
Inventeur : **Outifa, Lhoussain**
**3, rue Lachelier**
**F-75013 Paris (FR)**
Inventeur : **Delmotte, Michel**
**60, Av. du Petit Chambord**
**F-92340 Bourg La Reine (FR)**
Inventeur : **Maestrali, Bernard**
**10, rue Alexis Durand**
**F-77300 Fontainebleau (FR)**

(74) Mandataire : **Ernst-Schonberg, Michel**
**REGIE NATIONALE DES USINES RENAULT,**
**Société Anonyme dite:,**
**Service 02 67,**
**860, Quai de Stalingrad**
**F-92109 Boulogne-Billancourt (FR)**

(54) **Dispositif de traitement de matériaux par micro-ondes**

(57)   Dispositif de traitement par micro-ondes de matériaux comprenant un moule (1) destiné à contenir le matériau (3) à traiter et un générateur de micro-ondes destiné à appliquer au moule (1) l'énergie hyperfréquence nécessaire au traitement du matériau, le moule comprenant au moins deux matériaux diélectriques (4, 5, 6, 7), entourant le matériau (3) à traiter, caractérisé en ce que les matériaux diélectriques ont des permittivités diélectriques différentes telles que l'atténuation d'un segment élémentaire de longueur I situé entre les points de cote z(n-I) et zn de la dimension longitudinale du matériau (3) à traiter comprenant au moins un tronçon décomposé en segments de longueur I, est régie par la relation

$$\alpha = \frac{1}{2I} \, Log \left[ 1 - 2\alpha_0 I \, \frac{P_o}{P(n-1)} \right]$$

dans laquelle :
$\alpha$ est l'atténuation dans le segment élémentaire considéré,
$_0\alpha$ est l'atténuation initiale au sein du tronçon comprenant le segment élémentaire considéré,
$P_o$ est la puissance micro-onde appliquée au tronçon,
$P(n-1)$ est la puissance micro-onde transmise dans le plan de cote z(n-1).

EP 0 687 536 A1

## FIG.1

La présente invention est relative au traitement par micro-ondes de matériaux diélectriques .

Les traitements par micro-ondes habituellement utilisés pour l'élaboration ou la mise en oeuvre de matériaux diélectriques, notamment de matériaux composites à matrice organique, dont les dimensions sont supérieures à la demi-longueur d'onde du rayonnement électromagnétique font intervenir soit un système assurant le déplacement relatif du matériau par rapport à la structure spatiale du champ électromagnétique, soit un système de type à cavité multimode avec brasseur de modes de propagation.

Dans la seconde solution, qui met en oeuvre l'application d'une contrainte de pression, le matériau à traiter et les éléments diélectriques qui réalisent l'ensemble de maintien sous pression de ce matériau (matrice plus poinçon) constituent par leur permittivité moyenne, leurs dimensions et la configuration de leurs interfaces, un circuit électrique hyperfréquence qui sélectionne les modes de propagation. En effet, les expériences montrent que, avec ou sans brasseur de modes, des défauts d'homogénéité ou des "marquages hétérogènes" apparaissent au sein du matériau à traiter, si les traitements ne sont pas suffisamment doux et leurs durées suffisamment prolongées.

Les défauts d'homogénéité ou marquages observés dans ces expériences résultent de l'établissement de régimes d'ondes stationnaires qui sont générés dans le matériau par les réflexions internes aux interfaces, en fonction des modes de propagation excités par ces interfaces et en fonction des distances particulières qui les séparent. Ces effets sont d'autant plus importants que l'atténuation des ondes dans ces types de matériaux est relativement faible en raison de la faible constante diélectrique de pertes et que la diffusion de la chaleur favorise peu l'homogénéisation entre les zones marquées, du fait de la conductivité thermique également faible et de la durée des traitements volontairement réduite.

Une telle observation de marquages dus aux hétérogénéités et l'incidence des conditions de diffusion de la chaleur sont bien précisées dans le brevet FR.84 15 106. Dans le dispositif décrit dans ce brevet, l'homogénéisation résulte uniquement des conditions de conductivité thermique, l'applicateur restant du type multimode.

Pour le dispositif décrit dans le brevet JP- 60-135230, la contrainte de pression est réduite à une mise sous vide des matériaux à traiter ou à assembler par collage. De ce fait, le remplissage de l'applicateur reste faible et ne nécessite pas de conditions diélectriques particulières pour les valeurs de constante de permittivité.

Le brevet FR 88 08 081 ne précise aucun élément relatif à l'application de l'énergie micro-onde ni aux conditions de propagation des ondes.

Afin de remédier aux inconvénients de la technique antérieure on a proposé un " moule " où le champ électrique du mode fondamental est guidé de manière à éviter l'excitation des modes hybrides qui nuisent à l'homogénéité du traitement.

La grande difficulté rencontrée dans les procédés de traitement des matériaux par micro-ondes est le contrôle de la répartition spatiale de l'énergie électrique, notamment l'obtention d'un traitement homogène.

On a décrit au brevet FR 90 14889 un dispositif de traitement de matériaux diélectriques à l'aide de micro-ondes comprenant un moule destiné à contenir le matériau à traiter, des moyens de mise sous pression du matériau contenu dans le moule, et un générateur de micro-ondes destiné à appliquer au moule l'énergie hyperfréquence nécessaire au traitement du matériau. Le moule comprend plusieurs matériaux diélectriques ayant des permittivités diélectriques différentes et étant disposés dans le moule de manière que la permittivité diélectrique de l'ensemble varie en décroissant depuis le matériau à traiter jusqu'à la paroi extérieure du moule, la valeur de la permittivité diélectrique moyenne des matériaux diélectriques étant inférieure à la valeur correspondant à la situation de coupure du premier mode d'ordre supérieur au mode fondamental de l'onde électromagnétique engendrée par le générateur.

Le dispositif à micro-ondes décrit dans ce brevet a pour but de réaliser la transformation spatialement contrôlée d'un matériau.

Cette homogénéité est obtenue à l'aide d'un "moule" diélectrique dans lequel le mode fondamental de propagation est sauvegardé de manière à réaliser les volumes les plus grands possibles où les sources de chaleur sont réparties uniformément dans l'espace. Ce brevet définit également les conditions de distribution dans l'espace des éléments constitutifs du moule diélectrique pour obtenir une concentration importante de la puissance électromagnétique dans l'objet à élaborer. Un élément central de ce brevet est la description des adaptations des deux interfaces du moule diélectrique, interface d'entrée et interface de sortie pour la propagation de l'onde, de façon à maintenir une onde progressive sans régime stationnaire qui résulterait de réflexions éventuelles par des interfaces mal adaptées.

La présente invention met en oeuvre trois éléments nouveaux et différents de ceux décrits dans le brevet précité pour la conception des diélectriques constituant le moule en disposition, forme et caractéristiques diélectriques. Ces éléments complètent ou tempèrent la recommandation de disposer les diélectriques de permittivité décroissante à partir du plan médian de l'applicateur vers ses parois extérieures.

L'invention a donc pour objet un dispositif de traitement par micro-ondes de matériaux autres que les matériaux métalliques massifs comprenant un moule destiné à contenir le matériau à traiter, un applicateur métallique et au moins un générateur de micro-ondes destiné à appliquer au moule l'énergie hyperfréquence nécessaire au traitement du matériau, le moule comprenant au moins deux matériaux diélectriques entourant le matériau à traiter, caractérisé en ce que les matériaux diélectriques ont des permittivités diélectriques différentes entre elles telles que l'atténuation d'un segment élémentaire de longueur l situé entre les points de cote $z(n-1)$ et $zn$ de la dimension longitudinale du matériau à traiter comprenant au moins un tronçon décomposé en segments de longueur l, est régie par la relation

$$\alpha = \frac{1}{2l} \operatorname{Log} \left[ 1 - 2\alpha ol \, \frac{Po}{P(n-1)} \right]$$

dans laquelle :

$\alpha$ est l'atténuation dans le segment élémentaire considéré,

$\alpha o$ est l'atténuation initiale au sein du tronçon comprenant le segment élémentaire considéré,

$Po$ est la puissance micro-onde appliquée au tronçon,

$P(n-1)$ est la puissance micro-onde transmise dans le plan de cote $z(n-1)$.

Suivant une caractéristique particulière de l'invention, dans le cas d'un tronçon décomposé en segments de même longueur 1, l'atténuation du nième segment est régie par la relation :

$$\alpha = \frac{1}{2l} \operatorname{Log} \left[ 1 + \frac{2\alpha ol}{e^{-2\alpha ol} - 2n\alpha ol} \right]$$

Suivant une caractéristique particulière de l'invention, l'applicateur métallique contient les matériaux diélectriques et le matériau à traiter et sa section droite, selon sa dimension longitudinale, suit les courbures éventuelles de la pièce à élaborer à partir du matériau à traiter.

Suivant une autre caractéristique de l'invention, au moins une des deux dimensions de la section transversale de l'applicateur est variable dans le sens de la propagation des micro-ondes et permet une compensation de l'atténuation de l'onde résultant d'une focalisation trop importante des ondes dans la zone médiane de l'applicateur.

Suivant encore une caractéristique de l'invention, les constantes diélectriques de pertes des matériaux diélectriques sont différentes.

L'invention sera mieux comprise à la lecture de la description qui va suivre, faite en référence aux dessins annexés, donnés uniquement à titre d'exemple et sur lesquels :

- la Fig. 1 est une vue schématique en coupe d'un dispositif de traitement suivant l'invention ;
- la Fig. 2 est un graphique montrant l'allure de l'atténuation de la puissance transmise, émise par chaque générateur, obtenue dans un dispositif de traitement suivant l'invention.

Le dispositif de traitement suivant l'invention comporte un moule 1 formé d'un guide d'onde contenant un empilement de pièces de remplissage en matériau diélectrique qui délimitent une cavité 2 d'allure symétrique dans laquelle est disposé le matériau à traiter 3 et qui est alimentée par deux générateurs de micro-onde non représentés disposés à ses extrémités.

L'empilement est constitué dans le présent exemple de quatre couches de matériau diélectrique 4, 5, 6, 7.

Dans l'exemple représenté, les couches périphériques 4 et 7 sont réalisées en un matériau diélectrique de permittivité donnée tandis que les couches 5 et 6, situées au contact du matériau 3 à traiter, sont réalisées en un matériau de permittivité plus élevée.

Les constantes diélectriques de pertes de ces matériaux peuvent également être choisies différentes pour permettre une compensation de l'atténuation de l'onde.

Suivant l'invention, les épaisseurs des couches de matériau diélectriques 4 à 7 de remplissage du moule sont variables suivant la longueur du matériau 3 à traiter.

En fait, les deux dimensions de la section transversale de l'empilement formé par les couches 4 à 7 de matériaux diélectriques peuvent varier dans le sens de la propagation et permettre ainsi une compensation de l'atténuation de l'onde résultant d'une focalisation trop importante des ondes dans la zone médiane de l'applicateur, contenant le matériau 3 à traiter.

Ces variations d'épaisseur sont conçues de manière à obtenir dans le guide 1 du dispositif de traitement une atténuation de la puissance appliquée au dispositif dont la courbe suivant la longueur de celui-ci est formée d'un ensemble de parties d'exponentielles tendant vers une droite de pente -2αo, αo étant l'atténuation initiale, permettant d'obtenir une puissance absorbée homogène sur toute la longueur de la pièce à traiter.

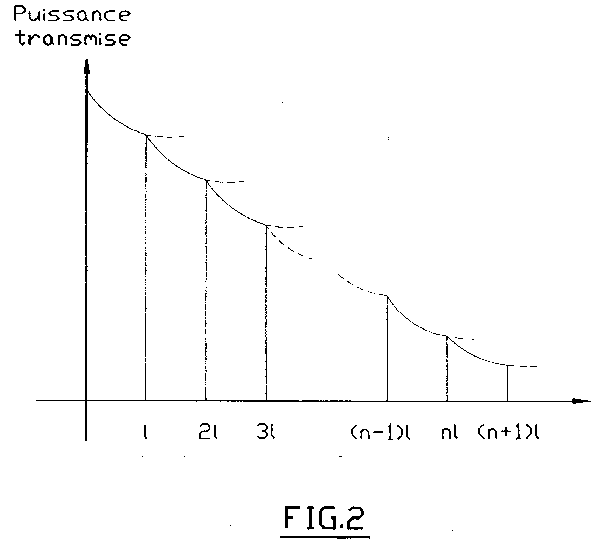

L'allure de l'atténuation obtenue est représentée sur le graphique de la Fig. 2.

L'atténuation d'un segment élémentaire de longueur l situé entre les points de cote nl et (n+1)l de la dimension longitudinale d'une pièce à traiter est donnée par la relation :

$$\alpha = \frac{1}{2l} \; Log \left[ 1 + \frac{2\alpha o l}{e^{-2\alpha o l} - 2n\alpha o l} \right]$$

Les valeurs αo et α sont obtenues physiquement par le choix des caractéristiques et des épaisseurs des couches 4, 5, 6, 7 de matériau diélectrique de remplissage du moule 1.

La longueur l des segments élémentaires peut être choisie en fonction des variations de forme d'une pièce à traiter et la dimension longitudinale de la pièce en matériau à traiter peut être décomposée en plusieurs tronçons formés chacun de segments l.

Dans le présent mode de réalisation le guide d'onde 1 a une forme incurvée, adaptée au matériau 3 à traiter qui est ici une pièce en forme d'arc d'épaisseur variable entre ses extrémités et son milieu.

Cependant le guide d'onde peut prendre une forme quelconque correspondant à la forme de la pièce à traiter.

Ainsi, selon la dimension longitudinale du guide d'onde, sa section droite suit les courbures éventuelles de la pièce à traiter.

A ses deux extrémités le guide d'onde 1 comporte des brides 8, 9 au moyen desquelles il est raccordé à des brides correspondantes 10, 11 de tronçons des guides d'ondes 12, 13 de liaison avec des générateurs de micro-ondes non représentés.

Ces tronçons 12 et 13 contiennent des interfaces 14, 15 d'entrée et/ou de sortie pour l'onde électromagnétique constituées par des biseaux favorisant la propagation par exemple du mode fondamental dans le moule.

Selon un mode de réalisation particulier, le guide d'onde 1 du moule du dispositif suivant l'invention est placé dans un dispositif d'application de pression 16 comprenant une matrice 17 dans laquelle est ménagée une chambre 18 ouverte à sa partie supérieure ayant une forme adaptée à celle du guide d'onde 1 et avec laquelle coopère un poinçon 19 d'application de pression au guide d'onde 1.

Cependant, le dispositif de traitement suivant l'invention peut également être dépourvu de moyens d'application de pression.

La concentration de la puissance électromagnétique par la disposition des diélectriques de moule par variation décroissante de la permittivité depuis celle du matériau à traiter vers les matériaux de remplissage à permittivité voisine de 1, peut conduire à une atténuation de l'onde non compatible avec la longueur des objets traités. Il apparaît ainsi un optimum à situer entre une efficacité ou un rendement énergétique forts, d'une part, et une atténuation suffisamment faible pour traiter longitudinalement les pièces de grande longueur, d'autre part. Les diélectriques constitutifs du moule présentent donc, en plus de la structuration transversale dans l'applicateur, une structuration longitudinale, dans le sens de la propagation. Cette structuration longitudinale est telle que, au voisinage de l'interface d'entrée, la structuration transversale est peu marquée. Par contre, dans le cas de la propagation unidirectionnelle des micro-ondes issues d'une seule source, au voisinage de l'interface de sortie, la structuration transversale correspond à la situation recommandée : décroissance transversale de la permittivité du matériau 3 à traiter vers les plans extérieurs. Entre ces deux dispositions extrêmes, la structuration longitudinale présente une variation continue de la structuration transversale. Dans ces conditions, on observe une compensation de l'atténuation par une concentration croissante de la puissance électromagnétique au sein de la pièce à traiter dans le sens de la propagation.

Ce nouveau mode de chargement des applicateurs, plus riche en diélectriques de diverses épaisseurs et de divers types, peut conduire à une valeur de la permittivité diélectrique moyenne supérieure à la valeur correspondant à la situation de coupure du premier mode de propagation d'ordre supérieur. En conséquence, des modes de propagation d'ordre supérieur, s'ils sont excités, peuvent se manifester et donner lieu à une propagation réelle.

Pour éviter cette excitation, il est nécessaire que les interfaces air-diélectrique ou diélectrique-diélectrique ne génèrent pas de composantes néfastes du vecteur champ électrique.

Pour qu'il en soit ainsi, les interfaces 14, 15, en nombre convenable, sont biseautées et disposées de façon à ne laisser se développer que le mode fondamental. La limitation à une valeur de permittivité diélectrique moyenne inférieure à la valeur de la situation de coupure du premier mode d'ordre supérieur est donc dépassée.

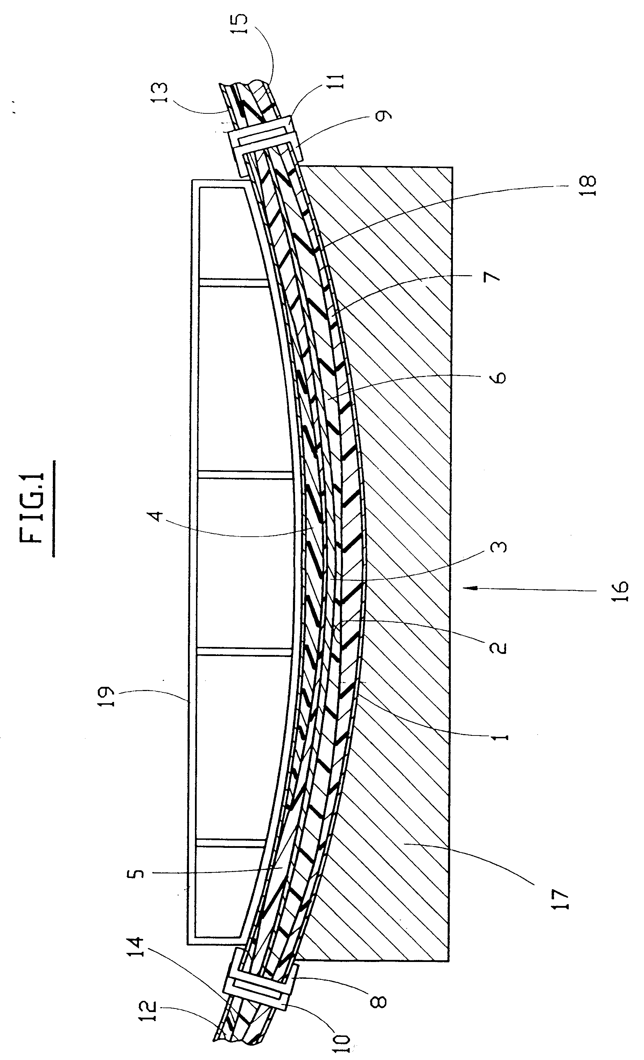

Les deux concepts de compensation de l'atténuation et du maintien du seul mode fondamental au-delà de la fréquence de coupure des modes d'ordre supérieur conduisent à la généralisation suivante. Dans le brevet français n° 90-14889, la principale propriété de la zone médiane du moule diélectrique est l'identité des permittivités du matériau à traiter et de son environnement diélectrique immédiat. Les détails de forme de la pièce à élaborer sont confondus dans le moule et la propagation électromagnétique n'est pas modifiée. Par contre, pour des variations massives importantes ou pour des matériaux à constante d'absorption élevée, l'atténuation de l'onde est marquée. Dans ces conditions, le moule diélectrique doit compenser les zones massives ou absorbantes de l'objet à élaborer par des diélectriques de volume et de permittivité suffisamment élevés pour réduire convenablement l'atténuation. Une modification adaptée de la dimension transversale de l'applicateur peut conduire au même résultat. C'est ce qui permet d'obtenir l'agencement de la Fig. 1 dans lequel les épaisseurs des couches de matériau diélectrique 4 à 7 remplissant le moule 1 varient suivant la longueur de celui-ci selon une loi déterminée par la variation d'atténuation à obtenir.

L'intérêt industriel et économique des utilisations de la présente invention réside dans l'obtention d'une répartition spatiale désirée des sources de chaleur lors de la mise en oeuvre et de la transformation thermique des matériaux. Cette homogénéité permet de travailler dans des conditions quasi adiabatiques. Ainsi les intérêts économiques réels sont :

- le gain de temps, surtout pour les matériaux les plus mauvais conducteurs et pour les moules de grande inertie thermique,
- le gain d'énergie, qui résulte de la réduction de la durée des traitements et de la disparition du préchauffage des outillages.

Les domaines d'applications sont d'abord la plasturgie et l'élaboration des composites :

- composites à matrice thermodurcissable (époxys, polyesters ...), moulés ou extrudés, ou à matrice thermoplastique (PE, PP ...),
- les pièces en caoutchouc, notamment en caoutchouc cellulaire expansé,
- les pièces en matière thermoplastique cellulaire,
- les pièces pour l'optique en polycarbonate ou polyméthacrylate,
- les isolants thermiques,

mais aussi les domaines concernés par des traitements thermiques d'objets de forme définie (agroalimentaire, pharmacie) ou concernés par une maîtrise indispensable de la distribution spatiale de la température (génie chimique).

On donne ci-après à titre d'exemple nullement limitatif des matériaux diélectriques utilisés pour le remplissage du moule.

|  | permittivité | cte de pertes diélectriques |
|---|---|---|
| composite silicone-verre | $\varepsilon' = 4{,}5$ | $\varepsilon'' = 0{,}03$ |
| composite à base de mica | $\varepsilon' = 5{,}5$ | $\varepsilon'' = 0{,}01$ |
| alumine frittée | $\varepsilon' = 9{,}0$ | $\varepsilon'' = 0{,}002$ |
| composite verre-epoxy | $\varepsilon' = 4{,}5$ | $\varepsilon'' = 0{,}05$ |

Ces matériaux sont assemblés dans le moule en fonction des atténuations que l'on souhaite obtenir.

Dans l'exemple qui vient d'être décrit le dispositif de l'invention est appliqué au traitement d'un matériau composite à matrice organique.

On peut toutefois envisager d'appliquer ce dispositif au traitement de divers matériaux tels que les matériaux polymères, les composites à matrice minérale, les produits alimentaires, les réactifs chimiques et autres à l'exception des matériaux métalliques massifs dont aucune des trois dimensions n'est inférieure au millième de la longueur d'onde des sources utilisées.

## Revendications

1.- Dispositif de traitement par micro-ondes de matériaux autres que les matériaux métalliques massifs comprenant un moule (1) destiné à contenir le matériau (3) à traiter et au moins un générateur de micro-ondes destiné à appliquer au moule (1) l'énergie hyperfréquence nécessaire au traitement du matériau, le moule comprenant au moins deux matériaux diélectriques (4, 5, 6, 7), entourant le matériau (3) à traiter, caractérisé en ce que les matériaux diélectriques ont des permittivités diélectriques différentes entre elles telles que l'atténuation d'un segment élémentaire de longueur 1 situé entre les points de cote z(n-1) et zn de la dimension longitudinale du matériau (3) à traiter comprenant au moins un tronçon décomposé en segments de longueur 1, est régie par la relation

$$\alpha \;=\; \frac{1}{21}\;\mathrm{Log}\left[1\;-\;2\alpha o 1\;\frac{Po}{P(n-1)}\right]$$

dans laquelle :

$\alpha$ est l'atténuation dans le segment élémentaire considéré,

$\alpha o$ est l'atténuation initiale au sein du tronçon comprenant le segment élémentaire considéré,

Po est la puissance micro-onde appliquée au tronçon, P(n-1) est la puissance micro-onde transmise dans le plan de cote z(n-1).

2.- Dispositif suivant la revendication 1, caractérisé en ce que dans le cas d'un tronçon décomposé en segments de même longueur 1, l'atténuation du nième segment est régie par la relation :

$$\alpha \;=\; \frac{1}{21}\;\mathrm{Log}\left[1\;+\;\frac{2\alpha o 1}{e^{-2\alpha o 1}\;-2n\alpha o 1}\right]$$

3.- Dispositif suivant l'une quelconque des revendications 1 et 2, caractérisé en ce que lesdits matériaux diélectriques forment un empilement remplissant un guide d'onde du moule (1) et comportant des couches périphériques (4,7) de matériau diélectrique de permittivité donnée et des couches (5,6) de matériau diélectrique de permittivité plus élevée situées au contact du matériau (3) à traiter.

4.- Dispositif suivant la revendication 3, caractérisé en ce que les couches (4, 5, 6, 7) de matériau diélectrique remplissant le moule (1) assurent la focalisation des ondes dans la zone médiane du moule (1) alors que leur section variable assure la compensation de l'atténuation de l'onde.

5.- Dispositif suivant l'une des revendications 1 à 4, caractérisé en ce que les deux dimensions de la section transversale de l'empilement formé par les couches de matériau diélectrique (4, 5, 6, 7) de remplissage du moule (1) sont variables suivant la longueur du matériau (3) à traiter.

6.- Dispositif suivant l'une des revendications 1 à 5, caractérisé en ce que le moule (1) a une forme adaptée à celle du matériau à traiter (3) au moins suivant la dimension longitudinale de celui-ci.

7.- Dispositif suivant l'une des revendications 1 à 5, caractérisé en ce que les constantes diélectriques de pertes des matériaux diélectriques sont adaptées aux conditions d'atténuation désirées.

8.- Dispositif suivant l'une des revendications 1 à 7, caractérisé en ce qu'il comporte en outre des moyens (16, 17, 18) de mise sous pression du matériau à traiter (3) contenu dans le moule (1) et en ce que les matériaux diélectriques (4, 5, 6, 7) sont des matériaux résistants à l'application d'une contrainte mécanique.

FIG.1

FIG.2

**Office européen des brevets**

# RAPPORT DE RECHERCHE EUROPEENNE

Numero de la demande

EP 95 40 1320

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,Y | FR-A-2 669 557 (AUTOMOBILES PEUGEOT) * le document en entier * --- | 1-4,6-8 | B29C33/06 H05B6/80 |
| Y | GB-A-759 001 (GENERAL PRECISION LABORATORY) * page 5, ligne 68 - page 7, ligne 88; revendications; figures * --- | 1-4,6-8 | |
| A | FR-A-2 650 775 (SOCIETE NATIONALE DES POUDRES ET EXPLOSIFS) * revendications; figures * --- | 1,8 | |
| D,A | FR-A-2 632 890 (USINES CHAUSSON) * revendications; figures * --- | 1,6,8 | |
| A | FR-A-2 402 526 (ISOBCX-BARBIER) --- | | |
| D,A | FR-A-2 571 201 (VALEO) ----- | | |

**DOMAINES TECHNIQUES RECHERCHES (Int.Cl.6)**

B29C
B29H
H05B

Le présent rapport a été établi pour toutes les revendications

| Lieu de la recherche | Date d'achèvement de la recherche | Examinateur |
|---|---|---|
| LA HAYE | 2 Octobre 1995 | Labeeuw, R |